# EUROPEAN PATENT APPLICATION

(11) **EP 4 530 240 A1**
(43) Date of publication of application: **02.04.2025**
(21) Application number: 23200751.8
(22) Date of filing: 29.09.2023
(51) Int. Cl.: B65H 85/00, C23C 14/58, H01M 10/04, H01M 4/1395, H01M 4/23, H01M 4/38, H01M 10/052, H01M 10/058, H01M 4/66, H01M 4/04

(54) **A SYSTEM, PLANT, AND METHOD FOR PROCESSING A BENDABLE FOIL, A PLANT FOR OBTAINING A METALATED BATTERY ELECTRODE AND A METHOD OF PRODUCING A BATTERY CELL**

(71) Applicant: CUSTOMCELLS Holding GmbH, 25524 Itzehoe (DE)
(72) Inventor: Kaiser, Bernd, 25524 Itzehoe (DE); Otepov, Sultan, 25524 Itzehoe (DE)
(74) Representative: LKGLOBAL Lorenz & Kopf Patentanwalt Attorney at Law PartG mbB

(57) **Abstract**

The invention relates to a system (1) for processing a bendable foil (2), comprising:
- a feeding unit (4) for feeding the foil (2) into the system (1) with a controlled feeding speed in a first direction (5); and
- at least one first transport and conditioning unit (7, 7a) for guiding the foil (2) in the first direction (5) and for providing a controlled first temperature to the foil (2); wherein the first transport and conditioning unit (7, 7a) comprises at least a first and a second guiding plate (9, 10), wherein the foil (2) is arranged between the first guiding plate (9) and the second guiding plate (10) in such a way, that the two guiding plates (9, 10) provide a first transport channel (8) for the foil (2), and wherein the guiding plates (9, 10) comprise gas outlets (11) to provide a gas cushion for conditioning the foil (2) and for contactless guiding of the foil (2) in said transport channel (8) between said first and second guiding plate (9, 10). The invention also relates to a plant (26) for processing a bendable foil (2), a plant (26) for obtaining a metalated battery electrode, a method of processing a bendable foil (2) and a method of producing a battery cell.

## Description

### FIELD OF THE DISCLOSURE

The present disclosure relates to a system and a plant for processing a bendable foil and a method of processing such a bendable foil. The present disclosure further relates to a plant for obtaining a metalated battery electrode and a method of producing a battery cell.

### BACKGROUND

Batteries play a critical role in modern society, powering a wide range of devices from portable electronics to electric vehicles. The increasing demand for portable electronics and electric vehicles has led to a growing need for batteries with higher energy density, longer life-span, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes. Battery electrodes are conductive materials that serve as positive and negative terminals in a battery.

In the context of battery technology, pre-metalation, more specific pre-lithiation, of the electrodes (i.e. the anodes or cathodes) has been proposed as a way to compensate for the consumption of metal ions in irreversible reactions during the formation of the solid electrolyte interface layer in the initial cycling. By introducing additional metal of the charge carrier species, the consumption of the solid electrolyte interface may be compensated, leading to improved battery performance.

During pre-lithiation, e.g. direct-contact pre-lithiation, heat is generated by the chemical processes and additional reaction heat or hydrogen is generated due to secondary reactions with nitrogen or oxygen and in combination with H₂O. The heat generated during the reaction of the lithium with the anode material can cause the electrode coated with lithium to self-ignite at the appropriate temperature. In addition, the binder of the electrode can decompose when a certain temperature is reached, releasing water. Likewise, the hydrogen produced in combination with H₂O can ignite due to this process heat. It is therefore necessary to keep the electrode at a controlled temperature during the reaction with the lithium and to keep the environment as free as possible from H₂O.

### SUMMARY OF THE DISCLOSURE

Currently, it remains desirable to provide a system and a plant as well as a method for processing a bendable foil, in particular a battery electrode foil, that provides a constant and safe environment for conditioning, i.e. tempering and reaction, of the foil.

Therefore, in a first aspect the present disclosure relates to a system for processing a bendable foil, the system comprising a feeding unit for feeding the foil into the system with a controlled feeding speed in a first direction, and at least one first transport and conditioning unit for guiding the foil in the first direction and for providing a controlled first temperature to the foil; wherein the first transport and conditioning unit comprises at least a first and a second guiding plate, wherein the foil is arranged between the first guiding plate and the second guiding plate in such a way, that the two guiding plates provide a first transport channel for the foil, and wherein the guiding plates comprise gas outlets to provide a gas cushion for contactless guiding of the foil in said transport channel between said first and second guiding plate.

The foil being bendable means that the foil may be wrapped in a coil for storage and/or transport and may be unwrapped in order to feed the foil into the system via the feeding unit. It also means that the foil may be bent for deflection or redirection during the conditioning process. The foil can be a single layer foil or a multi-layer foil, comprising two or more layers, which can have the same or different properties. The foil is to be understood as a continuous foil that is fed into the system on one side of the system and exits the systems at the other side, where the foil can be processed further or wrapped in another coil. Alternatively, the bendable foil may be a sheet with a length of 1,5 times of the length of a chamber of the system in which the bendable foil is conditioned. Thus, the foil does not have to be a continuous foil.

The foil being a multi-layer foil means that the foil is formed as a layer assembly with a first layer and at least a second layer. The number of layers is freely selectable and depends on the requirements of the foil or the product obtained after the conditioning process.

The term "conditioning", or "conditioned", is used herein to indicate treatment, i.e. heat treatment, for a predefined time at a predefined and controlled first temperature or temperature profile. A temperature profile may include a temperature gradient, that is a change in temperature over time. Therefore, conditioning can be employed for the effect of tempering of the bendable foil. The bendable foil is subjected to a gas environment with a predefined temperature.

When the bendable foil is a multi-layer foil the system may be used for continuous and industrial pre-lithiation of battery electrodes for the construction of lithium-ion accumulators (i.e. secondary batteries), wherein a lithium metal layer has been transferred onto the electrode using e.g. lithium-coated foils. Alternatives to lithium may include e. g. sodium, potassium, magnesium, calcium, or aluminum. The system may also be used as a drying line or as part of a metal coating apparatus, in particular a physical vapor deposition apparatus (PVD) or a chemical vapor deposition apparatus (CVD). Accordingly, the present disclosure is not restricted to a specific method of metal deposition.

The feeding unit applies the feeding speed in which the foil is fed into the system. In one option, the feeding unit comprises at least one driven roller element, optionally two driven roller elements, for applying the feeding speed to the foil and feeding the foil into the system. The driven roller element is connected to a drive unit which transmits a drive power to said driven roller element. By controlling the drive power, the feeding speed of the foil fed into the system can be controlled. In a further option, the feeding unit comprises one driven roller element and a non-driven roller element, which is configured to come in contact with the foil to keep it in line while the driven roller element conveys the foil in the first direction. Therefore, due to the foil conveyed in the first direction, the non-driven roller element rotates around its rotation axis.

The feeding unit conveys the foil into the at least first transport and conditioning unit of the system, where the foil is being conditioned, i.e. tempered, for a predefined time and at a predefined and controlled first temperature or temperature profile. Hence, feeding the foil into the system means conveying the foil into the first transport and conditioning unit via the feeding unit.

A transport and conditioning unit is a unit configured to guide the bendable foil in predefined conditions, i.e. until the bendable foil reaches a certain conditioning, i.e. treatment, state.

The time for which the foil is conditioned depends on the length of the at least first transport and conditioning unit as well as the feeding speed applied by the feeding unit. Accordingly, the length of the at least first transport and conditioning unit and the feeding speed applied by the feeding unit may be selected such that the foil is conditioned for the desired time.

The first temperature being controlled means that along the at least first transport and conditioning unit either a set temperature is kept constant while the foil being conditioned in the at least first transport and conditioning unit or a predefined temperature profile is applied along the at least first transport and conditioning unit.

The term "predefined" may be used to describe a parameter, such as temperature or speed, that has already been set up or defined before it is used or applied. "Predefined" may refer to a set of instructions, values, or settings that may have already been established and are ready to be used. Another term for "predefined" may be "predetermined".

The guiding plates have a plurality of gas outlets formed as openings and/or nozzles, which are connected to a gas pump or the like for pumping gas to the gas outlets to provide a gas cushion to avoid contact of the foil with the guiding plates. This prevents damage to the foil. The guiding plates can be made of or with metal or other materials with good thermal properties. The temperature in the at least first tempering unit can be controlled by heating units inside or outside of the guiding plates. The gas may additionally be heated before it is provided to the gas outlets.

The transport channel in which the foil is conveyed during the conditioning process is formed by the distance or gap between the first guiding plate and the second guiding plate. The distance between the guiding plates of the respective transport and conditioning unit corresponds to the height of the respective transport channel. In one option, the distance between the guiding plates has a constant level so that the gas cushion provided between the guiding plates has constant properties along the conveyance of the foil in the conveying direction, i.e. the first direction of the first transport and conditioning unit.

The gas cushion in said transport channel is created by directing the gas outlets of the first guiding plate and the second guiding plate respectively in the direction of the transport channel. In one option, the gas outlets of the first guiding plate and the second guiding plate are oriented perpendicular to the respective guiding plate, so that the gas stream of the gas outlets of the first guiding plate is directed in the opposite direction of the gas outlets of the second guiding plate. At least a few gas outlets can also be oriented at an angle smaller than 90° to the respective guiding plate. In one option, at least a few of the gas outlets mentioned above are oriented in such a way that the gas stream flows in the conveying direction of the foil.

In a further option of the disclosure, the system further comprises at least a first deflection unit for deflecting the foil guided in said transport channel in a second direction, wherein said second direction being different from said first direction.

The first deflection unit is configured to redirect the foil coming from the first transport channel between the guiding plates of the first transport and conditioning unit in a second direction. Therefore, the second direction is arranged with an angle to the first direction. By using at least one of said deflection units, the system can be formed more compact. This is particularly the case when the second direction is arranged parallel and opposite to the first direction. That means, the foil is being conveyed from a first floor into a second floor of the system with the same controlled conveying speed.

In a further option of the disclosure, the first deflection unit comprises at least one first deflection element, a driven first roller element and a non-driven second roller element, the second roller element being displaceable laterally with respect to said first roller element. For example, the second roller element may be displaceable or shiftable in a direction which is perpendicular to the rotation axis of the second roller element. The at least one deflection element and the roller elements are arranged and configured such that the foil is being redirected from one direction, i.e. the first direction, to a following direction, i.e. the second direction, with minimal contact between the foil and the elements of the deflection unit.

The at least one deflection element may be formed as a ramp or comprise a ramp-like section to either guide the foil from the first transport channel into a section, where the driven first roller element and the non-driven second roller element get into contact with the foil, or to guide the foil from said roller elements into the second transport channel. It is also possible to provide separate deflection elements for each case.

Therefore, the deflection unit can comprise two or more deflection elements, arranged such that the foil is being redirected from one direction to a following direction with minimal or without any contact between the foil and elements of the deflection unit.

In a further option of the disclosure, the at least one deflection element comprises gas outlets analogous to the gas outlets of the guiding plates of the transport and conditioning unit to provide a gas cushion for conditioning the foil as well as contactless guiding and redirecting of the foil.

The driven roller element of the deflection unit is connected to a drive unit which transmits a drive power to said driven roller element. The drive power is controlled such that the foil maintains the initial feeding speed, which now is the conveying speed or the transport speed of the foil to avoid unintentional tensile stresses or tensile stress fluctuations within the foil, which can damage or destroy the foil.

In an initial loading process during loading of the foil into the system, the foil is guided from one direction into the following direction, wherein the feeding speed of the foil can be controlled, i.e. by the rotational speed of the at least one driven roller element of the feeding unit and/or by the rotational speed of the at least one driven roller element of the at least one deflection unit.

The non-driven roller element of said deflection unit is configured to come into contact with the foil and to press the foil against the driven roller element to keep it in line while the driven roller element of the same deflection unit conveys the foil. Since the non-driven roller element is not applied with a driving force the non-driven roller element rotates around its axis with the same rotational speed as the driven roller element.

The non-driven roller element of the at least first deflection unit is configured to be dislocated with respect to the driven roller element of said deflection unit in order to terminate contact with the foil in certain operating situations, i.e. during the loading process.

In a further option of the disclosure, the system comprises at least a second transport and conditioning unit, configured to receive the foil from the first deflection unit to guide the foil in the second direction and to provide a controlled second temperature to the foil. The second transport and conditioning unit can be substantially identical to the first transport and conditioning unit, also comprising a first and a second guiding plate, which form a second transport channel in between to guide the foil in the second direction. The guiding plates of the second transport and conditioning unit also have gas outlets to provide a gas cushion for contactless guiding of the foil in the second transport channel between the guiding plates of the second transport and conditioning unit.

Everything said about the first transport and conditioning unit applies equally and analogously to the second transport and conditioning unit, with the difference that the foil is conveyed in the second direction instead of the first direction.

When the second direction is arranged parallel and opposite to the first direction, the second guiding plate of the first transport and conditioning unit and the first guiding plate of the second transport and conditioning unit may be formed in one piece. It is understood that the second guiding plate of the first transport and conditioning unit and the first guiding plate of the second transport and conditioning unit may also be formed separately, for example to arrange at least one gas line or pipe in between for supplying the gas outlets with gas.

In a further option of the disclosure, the system comprises at least a second deflection unit for deflecting the foil in a third direction, wherein said third direction being different from said second direction. The second deflection unit is preferably located at the end of the second transport and conditioning unit.

The second deflection unit is configured to redirect the foil coming from the second transport channel between the guiding plates of the second transport and conditioning unit in a third direction. Therefore, the third direction is arranged with an angle to the second direction and optionally the first direction. In one option, the third direction is arranged parallel and opposite to the second direction. That means, the foil is being conveyed from the second floor of the system into a third floor with the same controlled speed. In another option, the first and third directions are arranged parallel to each other pointing in the same direction.

Everything said about the first deflection unit applies equally and analogously to the second deflection unit, with the difference that the foil is now redirected or deflected from the second direction to the third direction.

It is understood that the system may be equipped with more than two transport and conditioning units and deflection units arranged in alternation. This allows a tower-like arrangement of the system in a space-saving and efficient manner, especially when the deflection units redirect the foil so that it is conveyed or transported in parallel directions from one end of the system to the other end and back until the conditioning process is complete and the conditioned foil can be guided out of the system for further processing.

Said loading process of the system takes place when the foil is loaded into the system for the first time, i.e. via the feeding unit into the at least first transport and conditioning unit and out of the respective transport and conditioning unit. The loading process is complete when the foil is picked up again at the end of the system after it has been conveyed through the system and, if necessary, further processed.

In a second aspect of the disclosure the present disclosure relates to a plant for processing a bendable foil, comprising a system according to the first aspect of the disclosure described above and a first winding element for winding up the foil after it was conditioned. In other words, when the conditioned foil leaves the last transport and conditioning unit or deflection unit of the system it may be conveyed to the first winding element of the plant, which is configured to wind up or wrap the conditioned foil into a coil or the like. The first winding element may be a driven winding element which rotates in a rotational speed according to the feeding speed and the conveying speed of the foil. The first winding element may be configured to apply a tensile force to the foil. Therefore, the first winding element may be drivingly connected to a drive unit. The rotational speed of the winding element corresponds to the feeding and conveying speed of the system to prevent the foil from damage or destruction.

In the second aspect of the disclosure, the bendable foil may comprise a layer assembly with a first layer and at least a second layer, the first layer being a battery electrode foil and the at least second layer being a metal coated layer, the metal coated layer comprising a substrate and a metal coating. In this case a metalated battery electrode is being obtained by conditioning the layer assembly in the at least one transport and conditioning unit. After conditioning the layer assembly, the layer assembly may be wound up by the first winding element, the at least second layer remaining on the first layer.

In a third aspect, the present disclosure relates to a plant for obtaining a metalated battery electrode, comprising a system according to the first aspect of this disclosure described above, wherein the bendable foil comprises a layer assembly with a first layer and at least a second layer, the first layer being a battery electrode foil and the at least second layer being a metal coated layer, the metal coated layer comprising a substrate and a metal coating, and the metalated battery electrode being obtained by conditioning the layer assembly in said transport and conditioning unit, the plant further optionally comprising a first substrate removal unit for removing the substrate from the first layer after the layer assembly being conditioned and optionally a first winding element for winding up the first layer after the substrate being removed from the first layer.

In other words, the plant is configured to obtain a metalated battery electrode by conditioning, i.e. heat treating, a multi-layer foil, i.e. the layer assembly.

Due to the continuous transport of the foil with the metal coated layer, i.e. a lithium-coated foil, on at least one side of the first layer, the reaction of the metal, i.e. the lithium, with the battery electrode foil can take place at a controlled, preferably constant, temperature or temperature profile by controlling the temperature and the transport speed of the foil under optimal and controlled conditions. The substrate of the at least second layer is removed at the end of the reaction by the first substrate removal unit, that is at the exit of the system when the foil is guided out of the system, so that the metalated battery electrode is protected from the influence of H₂O until then.

In this sense, it may be beneficial to provide a bendable foil with a first layer, a second layer and a third layer, the first layer being the battery electrode foil, the second layer being a first metal coated layer and the third layer being a second metals coated layer, wherein the first layer being arranged between the second layer and the third layer. In other words, a layer assembly may be provided also having a second metal coated layer with a substrate and a metal coating, wherein the first metal coated layer is arranged on one side of the battery electrode foil and the second metal coated layer is arranged on the other side of the battery electrode foil.

In this option, the third layer may be removed by a second substrate removal unit for removing the substrate of the third layer from the first layer after the layer assembly has been conditioned. By covering the first layer with a second and third layer the first layer is protected optimally from the influence of H₂O until the reaction process, i.e. the conditioning for a predefined amount of time, is finished.

The metalated battery electrode may be a type of battery electrode that contains a metal or metal alloy. The metal reacted with the metalated battery electrode may compensate for the loss of metal ions during initial cycling of the cell. The sum of charge carriers introduced into a battery with metalated anode and cathode may increase the capacity and lifespan of the battery. Of course, the metalated battery electrode may be easily recyclable. For example, the metal ions may be extracted from the electrode material and reused in other batteries. The metalated battery electrode may be or may serve as an anode or a cathode of a battery cell.

By the term "layer assembly" any kind of layered structure is meant. This means, the layer assembly may be constructed by layering different materials on top of each other. The layer assembly may be constructed by using various techniques such as calendering, coating, casting, or pressing. Furthermore, the second layer and optionally the third layer may be applied to the respective surface of the battery electrode foil using a variety of methods, such as lamination, sputtering, or vapor deposition. The different layers in the layer assembly may serve different functions such as providing structural support, increasing conductivity, recyclability or improving the electrochemical performance of the battery electrode. The layer assembly may be provided, for example, by pressing (with optional lamination) the second layer and on the battery electrode foil and optionally the third layer on the battery electrode foil on the opposite side of the battery electrode foil.

The battery electrode foil, namely the first layer of the layer assembly, may be a thin film-like sheet of material that is used as one of the electrodes in a battery. The battery electrode foil may have any thickness and width. The material of the battery electrode foil may be chosen to guarantee a good electrical conductivity, high thermal stability, and low resistance.

In the pre-lithiation process heat is generated by the chemical processes and additional reaction heat or hydrogen is generated by secondary reactions with nitrogen or oxygen and in combination with H₂O. The heat generated during the reaction of the lithium with the anode material can cause the electrode coated with lithium to self-ignite at the appropriate temperature. In addition, the binder of the electrode can decompose when a certain temperature is reached, releasing water (condensation reaction, e.g. when using PAA (130°C) or CMC (160°C)). Likewise, the hydrogen produced in combination with H₂O can ignite due to this process heat. Hence, the second layer and optionally the third layer may each serve as a physical and electrical barrier, to prevent the first layer, namely the battery electrode foil, from an unwanted reaction. Keeping the electrode at a controlled, preferably constant, temperature during the reaction with the lithium also optimizes the process.

The first winding element may be designed analogously to the first winding element according to the second aspect of the disclosure.

In a further option, the plant comprises a second winding element for winding up the substrate of the at least second layer of the layer assembly. After the substrate of said first metal coated layer being removed from the battery electrode foil by the first substrate removal unit the substrate may be wound up or coiled by the second winding element for further processing, storage, or transportation. The second winding element may be part of the first substrate removal unit. The second winding element may be a driven winding element which rotates in a rotational speed corresponding to the feeding speed and the conveying speed of the foil. The second winding element can be configured to apply a tensile force to the substrate of the first metal coated layer in order to detach the substrate safely.

When the layer assembly is provided with a third layer and the third layer being a second metal coated layer according to the first metal coated layer of the second layer mentioned above, the plant may further comprise a second substrate removal unit for removing the substrate of the third layer from the first layer after the layer assembly has been conditioned in the system. It is obvious that in this case the plant may comprise a third winding element for winding up the substrate of said second metal coated layer. After the substrate of said second metal coated layer being removed from the battery electrode foil by the second substrate removal unit, the substrate may be wound up or coiled by the third winding element for further processing, storage, or transportation. The third winding element may be part of the second substrate removal unit. The third winding element can be configured to apply a tensile force to the substrate of the second metal coated layer in order to detach the substrate safely.

Said second and optionally third substrate removal unit may provide means for separating the substrate from the first layer of the layer assembly. Such means can be ramps or ramp-like elements with a sharp edge to realize accurate detachment of the respective substrate from the first layer and prevent damage or tearing of the substrate.

In a fourth aspect the present disclosure relates to a method of processing a bendable foil. The method comprises providing a system for processing a bendable foil according to the first aspect of the disclosure. The method also comprises providing the bendable foil. Furthermore, the method comprises feeding the foil into the system with a controlled feeding speed in the first direction. The method also provides the step of contactless guiding and conditioning of the foil in the first transport channel by an air cushion provided between the first guiding plate and the second guiding plate of the first transport and conditioning unit.

Regarding this method, reference is made to the explanations, examples, and descriptions according to the first and second aspects of the disclosure.

According to a further option of the disclosure, the method also comprises contactless guiding of the foil in the first transport channel until the foil reaches the first deflection unit. Furthermore, the method comprises deflecting the foil from the first direction into the second direction by the at least one first deflection element and the roller elements of said first deflection unit, the foil being conveyed into the second direction by the driven first roller element. The method also comprises contactless guiding and conditioning of the foil in a second transport channel by an air cushion provided between a first guiding plate and a second guiding plate of the second transport and conditioning unit the foil reaches the second deflection unit. In addition the method comprises deflecting the foil from the second direction into the third direction by the at least one first deflection element and the roller elements of said second deflection unit, the foil being conveyed into the third direction by the driven first roller element, wherein, when the second deflection unit receives the foil for deflecting and forwarding the foil into the third direction the non-driven roller element of the first deflection unit is being displaced laterally with respect to the first roller element of the first deflection unit such that the non-driven roller element does not contact the foil anymore.

Such method provides the opportunity to make the system self-loading, wherein the foil is being fed to the system in a continuous flow. A loose end of a newly clamped foil band is automatically guided through the system by the transport and conditioning units and the deflection units.

During the self-loading process the foil is being brought into contact with the feeding unit such that the feeding unit conveys the foil into the first transport and conditioning unit, then into the first deflection unit, then into the second transport and conditioning unit, then into the second deflection unit, and so on, until the conditioning process is finished and the desired reaction of the foil or parts or layers of the foil occurred, wherein whenever the free end of the foil reaches the next deflection unit the non-driven roller element of the previous deflection unit is being displaced laterally with respect to the driven roller element of the same deflection unit to release tensions within the foil and to center the foil in its conveying direction within the system. Therefore, the non-driven roller elements of the deflection units are only used for the self-loading process of the system.

The foil comes into contact with both roller elements of the particular deflection unit only during the self-loading process. Once the free end of the foil reaches the following deflection unit, the non-driven roller element of the previous deflection unit is moved away from the foil, so that only the driven roller element stays in contact with the foil. This means that at any time during the self-loading process, only one non-driven roller element is in contact with the foil, namely the non-driven roller element located furthest forward in the conveying direction of the foil, while the other non-driven roller elements of previous deflection units are no longer in contact with the foil, i.e. have been displaced with respect to the driven roller element and the foil. At the end of the self-loading process, that is when the free end of the foil is guided out of the system at the exit, no non-driven roller elements contact the foil anymore. Only the driven parts of the system contact the foil, wherein the foil hovers in between these parts by the gas cushion.

By maintaining the continuous material flow into the system, no further manpower, other than for monitoring, is required to either feed or load the system.

It is obvious that multiple stories of transport and conditioning units can be provided, wherein two adjacent or following transport and conditioning units being connected by a deflection unit.

During the conditioning process executed by the system the foil gets only into contact with the at least one roller element, i.e. the roller elements, of the feeding unit and the driven roller elements of the deflection units. At the exit of the system at least one more driven and/or non-driven roller element can be provided, wherein the foil also comes into contact with the at least one roller element at the exit of the system.

In one option of the disclosure, the method is being carried out under dry air or protective gas atmosphere conditions. This can prevent unwanted side effects during the reaction of the foil due to conditioning. In particular, the environment can be kept free from H₂O as much as possible.

When a dry air atmosphere is being used for carrying out the method, it is beneficial when the air has a dew point, that is a dew point temperature, of -45°C. The dew point is the temperature the air needs to be cooled to (at constant pressure) in order to achieve a relative humidity (RH) of 100%. The lower the dew point sinks, the lower the amount of moisture in the air.

An Argon containing gas mixture can be used for providing a protective or inert gas atmosphere during the reaction process. Using a high purity Argon containing gas, i.e. Argon 5.0, is beneficial for the process according to this disclosure. Argon 5.0 contains 99.999 % of Argon (Ar₂), wherein minor components can be nitrogen (<5 vppm), moisture (<1.5 vppm), oxygen (<1 vppm) hydrocarbons (<0.5 vppm) and/or carbon dioxide (<0.5 vppm).

The present disclosure relates in a fifth aspect to a method of producing a battery cell. The method comprises obtaining a metalated battery electrode according to any one of the preceding method claims, the bendable foil comprising a layer assembly with a first layer and at least a second layer, the first layer being a battery electrode foil and the at least second layer being a metal coated layer, the metal coated layer comprising a substrate and a metal coating, wherein the metalated battery electrode being obtained by conditioning the layer assembly in said transport and conditioning unit.

Regarding this method, reference is made to the explanations, examples, and descriptions according to the third aspect of the disclosure.

By providing such method, the limitations of conventional techniques (as e.g. described above) can be overcome by providing optimal, i.e. constant, conditions for the reaction of the lithium in the metal coated layer with the electrode by controlling the transport speed under optimal conditions. The respective substrate is removed at the end of the reaction process, so that the metalated battery electrode is protected from unwanted side effects, i.e. from the influence of H₂O, until the conditioning process is finished.

The obtained metalated battery electrode may serve as an active material for the battery. The metal coating of the metal coated layer may be a source of metal ions or particles to be moved into the active material. In other words, the active material may comprise metals that moved from the metal coating of the metal coated layer into the battery electrode foil. During the operation of the battery, the active material may be the material that may undergo a reversible electrochemical reaction during the charge and discharge process. In other words, the active material may be the substance that may participate in the electrochemical reactions producing the flow of electrons within the battery. The metal coating may comprise all kinds of metal ions such as ions of lithium, sodium, magnesium, aluminum, potassium and/or calcium.

The metalated battery electrode produced using the method described in the present disclosure may be used in various electrochemical devices, such as batteries, supercapacitors, and other energy storage and conversion devices. These devices may be used in a wide range of applications, including portable electronic devices, electric vehicles, grid energy storage, and renewable energy systems.

In one option, the method further comprises removing the substrate from the battery electrode foil and winding up the metalated battery electrode on a first winding element. In a further option, the method comprises winding up the substrate on a second winding element. Regarding these aspects, reference is made to the above description to avoid repetitions.

It is intended that combinations of the above-described aspects, elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

### BRIEF DESCRIPTION OF THE DRAWINGS

Fig. 1 shows a system for processing a bendable foil and for obtaining a metalated battery electrode according to examples of the present disclosure.
Fig. 2 shows an exemplary guiding plate of a transport and conditioning unit of the system according to Fig. 1.
Fig. 3 shows a cross section of the foil, comprising a layer assembly, which is being processed in the system according to examples of the present disclosure.
Fig. 4 shows a plant for processing a bendable foil and for obtaining a metalated battery electrode according to examples of the present disclosure.
Fig. 5 shows a flowchart of a method of producing a battery cell according to examples of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

The present disclosure relates to a system 1 and a plant 26 for processing a bendable foil and a method of processing such a bendable foil 2. The foil 2 can be a single layer or a multi-layer foil, comprising two or more layers with different properties and characteristics. A preferred field of application for processing the bendable foil 2 is to obtain a metalated battery electrode from said foil 2, which can be used to produce battery cells. Therefore, the present disclosure also relates to a plant 26 for obtaining a metalated battery electrode and a method of producing a battery cell.

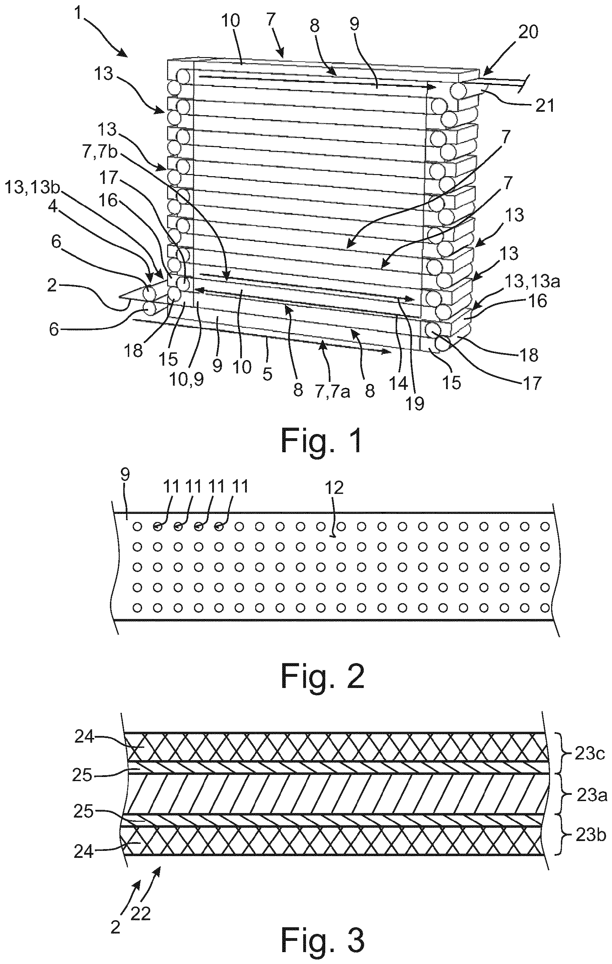

Fig. 1 shows a system 1 for processing a bendable foil 2 and for obtaining a metalated battery electrode 3 according to examples of the present disclosure.

The system 1 comprises a feeding unit 4 for feeding the foil 2 into the system 1 with a controlled feeding speed in a first direction 5. The feeding unit 4 comprises two driven roller elements 6 to transmit a driving force to the foil 2 to set the predefined feeding speed.

According to the example of the system 1 shown in Fig. 1, the system 1 has seventeen transport and conditioning units 7, 7a, 7b arranged on top of each other in a tower-like manner. Each transport and conditioning unit 7, 7a, 7b comprises a first guiding plate 9 and a second guiding plate 10, wherein the guiding plates 9, 10 are arranged spaced apart such that they form a transport channel 8 with a constant height along the conveying direction of the foil 2, the first guiding plate 9 bounding the transport channel 8 downward and the second guiding plate 10 bounding the transport channel 8 upward.

The guiding plates 9, 10 are formed such that, for example, the second guiding plate 10 of the first transport and conditioning unit 7a is formed in one piece with the first guiding plate 9 of the second transport and conditioning unit 7b located above and immediately adjacent to the second guiding plate 10 of the first transport and conditioning unit 7a. This is to be understood analogously for all transport and conditioning units arranged directly above and immediately adjacent to one another.

At the entrance of the system 1 at the bottom left shown in Fig. 1, the foil 2 is conveyed into the first transport and conditioning unit 7a via said feeding unit 4, wherein the feeding unit 4 guides the foil 2 along the transport channel 8 in the first direction 5. Both guiding plates 9, 10 comprise a plurality of gas outlets 11 to provide a gas cushion for firstly conditioning the foil 2 at the predefined temperature as well as secondly for contactless guiding of the foil 2 in the transport channel 8. The gas outlets 11 prevent the foil 2 from contacting elements or sections of the respective transport and conditioning unit 7, 7a, 7b. The gas outlets 11 can be pneumatically connected to a gas pump or the like not shown in the figures provided in this disclosure.

Hence, the guiding plates 9, 10 serve on the one hand to provide the gas for the gas cushion in the transport channel 8 and on the other hand to maintain the set temperature inside the system 1.

An exemplary first guiding plate 9 is shown in section in Fig. 2, wherein the gas outlets 11 are arranged at a surface 12 of the first guiding plate 9 in an orderly manner. The gas outlets 11 may also be arranged randomly distributed on the surface 12 of the first guiding plate 9. In this example, the gas outlets 11 are arranged in five evenly spaced, parallel rows along the longitudinal direction of the guiding plate 9 with constant distance in longitudinal and transverse direction. The gas outlet direction, that is the direction in which the gas is flowing out of the respective gas outlet 11, can also be adapted to the requirements of the system 1. Preferably, the gas exits the gas outlets 11 nearly in the respective conveying direction of the foil 2. The second guiding plate 10 may be formed analogously to the guiding plate 9 according to Fig. 2. Preferably, the second guiding plate 10 may be formed mirror inverted.

The system 1 also comprises a plurality of deflection units 13, 13a, 13b at both ends of the system 1, the deflection units 13, 13a, 13b being configured to connect two adjacent transport and conditioning units 7, 7a, 7b, i.e. the transport channels 8 of the adjacent transport and conditioning units 7, 7a, 7b to each other and to deflect the foil 2 from a lower transport and conditioning unit 7a to another transport and conditioning unit 7b arranged on top of the lower one.

In other words, from the transport channel 8 of the first transport and conditioning unit 7a the foil 2 reaches a first deflection unit 13a configured to deflect the foil 2 from the first direction 5 into a second direction 14, wherein the second direction 14 is predetermined by the design and extension of the following, i.e. the second transport and conditioning unit 7b. Fig. 1 shows that the second direction 14 being different from said first direction 5. Here, the second direction 14 is pointing in the opposite direction of the first direction 5. Therefore, the first and second direction 5, 14 are arranged parallel to each other.

Each deflection unit 13, 13a, 13b comprises a first deflection element 15, a second deflection element 16, a driven first roller element 17 and a non-driven second roller element 18.

The foil 2 is herein deflected by the first deflection element 15 and the second deflection element 16, both having a ramp-like structure as well as gas outlets, which are not shown in the figures herein. These gas outlets are formed basically analogous to the gas outlets 11 of the guiding plates 9, 10 preventing the foil 2 from coming into contact with elements of the deflection unit 13, 13a, 13b except the first roller element 17, which is configured to receive the foil 2 from the first direction 5 in order to convey it into the second direction 14. The driven first roller elements 17 of the deflection units 13, 13a, 13b are always arranged on the inside of the curve through which the foil 2 passes while it is being conveyed upwards in the system 1.

The second roller elements 18 are arranged on the outside of the curve with respect to the first roller elements 17, wherein, when the second roller elements 18 are in contact with the foil 2 on the other side of the respective first roller elements 17, they rotate at the same rotational speed as the first roller elements 17, but in the opposite direction. The second roller elements 18 are displaceable laterally with respect to said first roller element 17 of the respective deflection unit 13, 13a, 13b in order to terminate the contact with the foil 2. This is necessary during an initial loading process, which will be described below in more detail. During the normal treatment process of the foil 2 following the loading process the second roller elements 18 do not contact the foil 2 anymore.

Coming from the first deflection unit 13, 13a, 13b, the foil 2 is conveyed into the second transport and conditioning unit 7b, which is formed analogously and basically identical to the first transport and conditioning unit 7a below, guiding the foil 2 in a transport channel 8 in the second direction 14 between the first and second guiding plates 9, 10 of the second transport and conditioning unit 7b. The gas outlets 11 in the guiding plates 9, 10 of the second transport and conditioning unit 7b may be pneumatically connected to a separate gas pump or to the same gas pump of the gas outlets 11 of the first transport and conditioning unit 7a. By that, a different or the same temperature can be provided by the second transport and conditioning unit 7b with respect to the first transport and conditioning unit 7a. In other words, the second transport and conditioning unit 7b is configured to receive the foil 2 from the first deflection unit 13a to guide the foil 2 in the second direction 14 as well as providing a controlled second temperature to the foil 2.

The foil 2 being conveyed into the second transport and conditioning unit 7b is redirected from the second direction 14 into an opposite third direction 19 by the second deflection unit 13b on the left side of the system according to Fig. 1. The second deflection unit 13b is arranged mirror-inverted to the first deflection unit 13a. Therefore, reference is made to the above description sections concerning the first deflection unit 13, 13a to avoid repetitions. The third direction 19 and the first direction 5 are pointing in the same direction.

After the second deflection unit 13b the foil 2 is conveyed according to the section between the feeding unit 4 and the first deflection unit 13a, whereupon the foil 2 is guided again according to the section between the first deflection unit 13a and the second deflection unit 13b, and so on. Hence, the foil 2 is conveyed from the left side of the system 1 to the right side of the system and back moving up the system 1 floor by floor, with a predefined speed and a controlled temperature until the conditioning process is complete.

At the end of the conditioning process the foil 2 reaches a top level of the system 1 where the foil 2 is being conveyed out of the system 1 through an exit 20. The exit 20 comprises a roller element 21, which can be a driven roller element. After leaving the exit 20, the conditioned foil 2 can be conveyed for further processing or wound up for storage or further transport.

In this option, the bendable foil 2 is a multi-layer foil, wherein the system 1 described above is used for obtaining a metalated battery electrode 3. The foil 2 comprises a layer assembly 22 according to Fig. 3 with a first layer 23a, a second layer 23b and a third layer 23c, the first layer 23a being a battery electrode foil, the second and third layer 23b, 23c each being a metal coated layer, the metal coated layer comprising a substrate 24 and a metal coating 25. The foil 2 is of a pre-lithiated material.

The metalated battery electrode 3 is obtained by conditioning, i.e. tempering, the layer assembly 22 of the foil 2 in the transport and conditioning units 7, 7a, 7b described above. The conditioning duration depends on the feeding speed, i.e. the conveying speed of the foil 2 given by the roller elements 6 of the feeding unit 4 and the driven roller elements 17 of the deflection units 13, 13a, 13b and the amount of floors, in which the foil is being alternately conveyed from a transport and conditioning unit 7, 7a, 7b to a deflection unit 13, 13a, 13b, and vice versa, until the conditioned foil 2 is guided out of the system 1 at the exit 20. The more floors this arrangement has, the longer the distance the foil 2 must travel within the system 1.

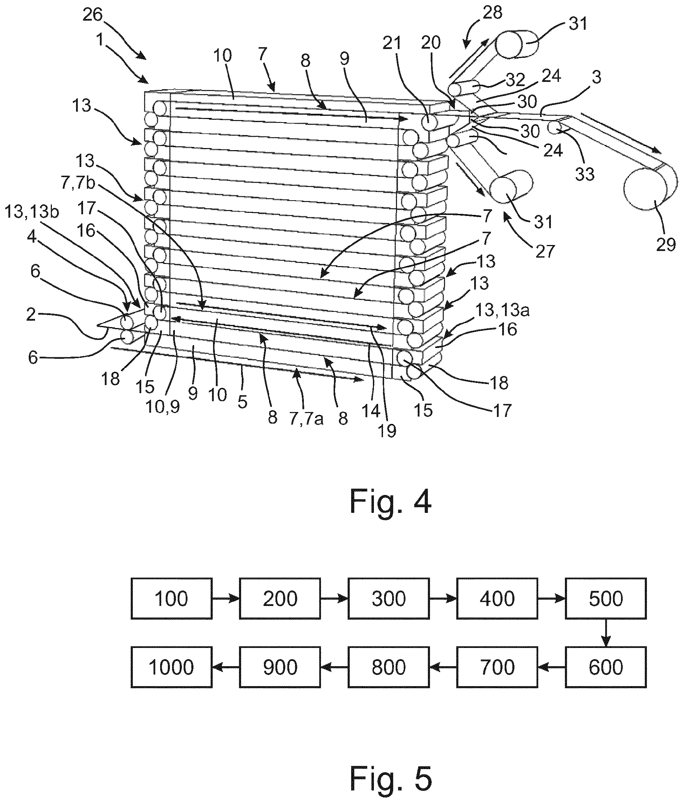

Fig. 4 shows the plant 26 for processing the bendable foil 2 and for obtaining said metalated battery electrode 3. The plant 26 comprises the system 1 according to Fig. 1. The metalated battery electrode 3 is being obtained by conditioning the layer assembly 22 in said transport and conditioning units 7, 7a, 7b. The plant 26 further comprises a first substrate removal unit 27 for removing the substrate 24 of the second layer 23b from the first layer 23a and a second substrate removal unit 28 for removing the substrate 24 of the third layer 23c from the first layer 23a.

The first layer 23a is wound up by a first winding element 29 after the substrates 24 have been peeled off from both sides of the first layer 23a by the substrate removal units 27, 28, wherein the first layer 23a being deflected between the roller element 21 at the exit 20 and the first winding element 29 by a deflection pulley 33, which is aligned with the roller element 21 at the exit 20.

The substrate removal units 27, 28 are arranged at the exit 20 of the system 1, wherein each substrate removal unit 27, 28 has a ramp-like element 30 configured to provide an edge for peeling off the substrate 24 from the first layer 23a. The ramp-like elements 30 are formed as wedges each with an acute angle. Each substrate removal unit 27, 28 also has a second winding element 31 and a non-driven deflection pulley 32, wherein the second winding elements 31 are configured to wind up the respective substrate 24 after it has been peeled from the first layer 23a.

During the conditioning process in the system 1, the metal coating 25 of the second and third layer 23b, 23c have reacted with the material of the first layer 23a being the battery electrode foil in order to obtain the metalated battery electrode 3. In other words, the metal coating 25 becomes part of the first layer23a during the conditioning process, so that only the protective substrate 24 of the second and third layer 23b, 23c needs to be removed by the substrate removal units 27, 28.

Fig. 5 shows a flowchart of a method of processing a bendable foil 2 with a plant 26 according to examples of the present disclosure. A bendable foil 2 is provided in a first step 100, wherein in a second step 200, the foil 2 is fed into the system 1 according to Fig. 1 in combination with Fig. 2 to Fig. 4 via the feeding unit 4 with a controlled feeding speed and in the first direction 5. In a third step 300, the foil 2 is guided contactless and conditioned in the first transport channel 8 by an air cushion provided by gas streaming from gas outlets 11 in the first guiding plate 9 and the second guiding plate 10 of the first transport and conditioning unit 7, 7a. Hence, the air cushion is created by said gas outlets 11 in the guiding plates 9, 10 through which gas streams into the transport channel 8 from both sides of the foil 2 such that the foil 2 hovers through the first transport channel 8 without contacting the guiding plates 9, 10 of the first transport and conditioning unit 7, 7a in order to prevent the foil 2 from damage. The foil 2 is guided contactless in the first transport channel 8 and in the first direction 5 until the foil 2 reaches the first deflection unit 13, 13a.

In a fourth step 400, the foil 2 is deflected from the first direction 5 into the second direction 14 by the deflection elements 15, 16, the driven first roller element 17, which deflects the foil 2 from the first into the second direction 5, 14, and the non-driven second roller element 18, which positions the foil 2 laterally and supports the deflection of the foil 2. The deflection elements 15, 16 of said first deflection unit 13, 13a both also have gas outlets to prevent the foil 2 from being stressed or damaged by contacting unwanted parts of the system 1. According to the example of Fig. 1 the foil 2 is deflected from a first floor to a second floor, the first and second direction 5, 14 being parallel and spaced apart from each other.

In a fifth step 500, the foil 2 is being guided without contact and conditioned in a second transport channel 8, that defines the second direction 14. Just as in the transport channel 8 of the first transport and conditioning unit 7, 7a, a gas cushion is provided between the first guiding plate 9 and the second guiding plate 10 of the second transport and conditioning unit 7, 7b so that the foil 2 hovers through the first transport channel 8 without contacting the guiding plates 9, 10 of the second transport and conditioning unit 7, 7b to prevent the foil 2 from damage. The foil 2 is guided contactless in the second transport channel 8 and in the second direction 14 until the foil 2 reaches the second deflection unit 13, 13b.

In a sixth step 600, the foil 2 is deflected from the second direction 14 into the third direction 19 by the deflection elements 15, 16, the driven first roller element 17, which deflects the foil 2 from the second into the third direction 14, 19, and the non-driven second roller element 18, which positions the foil 2 laterally and supports the deflection of the foil 2. The deflection elements 15, 16 of said second deflection unit 13, 13b both also have gas outlets to prevent the foil 2 from being stressed or damaged by contacting unwanted parts of the system 1. According to the example of Fig. 1, the foil 2 is deflected upwards from a second floor to a third floor, the second and third direction 14, 19 being parallel and spaced apart from each other.

In the sixth step 600, when the second deflection unit 13, 13b receives the foil 2 for deflecting and forwarding the foil 2 from the second into the third direction 14, 19 the non-driven roller element 18 of the first deflection unit 13, 13a is being displaced laterally with respect to the first roller element 17 of the first deflection unit 13, 13a such that the non-driven roller element 18 does not contact the foil 2 anymore. This makes it possible, that the system 1 is self-loading over several floors without further action of a worker.

In a seventh step 700, the foil 2 is conveyed from the second deflection unit 13, 13b into a following transport and conditioning unit 7 according to the first and second transport and conditioning unit 7a, 7b mentioned above.

In an optional step, the foil may be conveyed from the following transport and conditioning unit 7 to another deflection unit 13 according to the sections mentioned above.

In an eighth step 800, the foil 2 is conveyed out of the system 1 at the exit 20 of the system 1. The feeding speed, i.e. the conveying speed of the foil is controlled such that the foil 2 spends enough time in the system 1 for conditioning until the foil 2 reaches a desired conditioning state.

The method is carried out under dry air or protective gas atmosphere conditions. That means the system 1 according to Fig. 1 is arranged in a housing not shown, wherein the method, i.e. the steps 100 to 800 of said method, are carried out in dry room or protective gas conditions with ventilation to provide optimal conditions for conditioning the foil 2. The foil 2 is exposed to the gas at a controlled temperature as long as the foil 2 is being conveyed within the housing of the system 1.

For example, when the foil 2 is a single layer foil 2, a single winding element 29 can be provided at the exit 20 of the system 1 for winding up the foil 2 after it being conditioned in the system 1. That means, the steps 100 to 800 can be carried out with diverse types of bendable foils 2 regardless of whether the foil 2 has one or more layers.

Since in this example the bendable foil 2 comprises a layer assembly 22 with different layers 23a, 23b, 23c arranged on top of each other according to Fig. 3, in a ninth step 900 the substrates 24 of the second and third layer 23b, 23c, of which at the end of the conditioning process according to the steps 100 to 800 a metalated battery electrode 3 is obtained, are peeled of the first layer 23a by substrate removal units 27, 28 in order to obtain only the first layer 23a now being the metalated battery electrode 3 after the conditioning process. In the ninth step 900 the first substrate removal unit 27 peels off the substrate 24 of the second layer 23b from the first layer 23a and winds up the substrate 24 for further processing or transportation on the second winding element 31 of the first substrate removal unit 27. In the ninth step 900, the second substrate removal unit 28 also peels off the substrate 24 of the third layer 23c from the first layer 23a and winds up the substrate 24 for further processing or transportation on the second winding element 31 of the second substrate removal unit 28.

In a tenth step 1000, the first layer 23a, which is now the separated metalated battery electrode 3, is wound up on the first winding element 29 for further processing or transportation.

It goes without saying, that depending on the design of the system 1 and the number of transport and conditioning units 7 as well as deflection units 13, between step 700 and step 800 more optional steps of guiding and conditioning of the foil 2 in a respective transport and conditioning unit 7 as well as deflecting and redirecting the foil 2 from one direction to another can be carried out. That means that transportation of the foil 2 inside the system 1 can be continued in a repetitive manner up to the last or the top floor before the foil 2 is conveyed to and out of the exit 20.

By adjusting the transport speed, the system 1 can be set to the optimum reaction time of the electrode. At the exit 20, the electrode can be wound up safely onto a core, namely the first winding element 29.

The steps 900 and 1000 can be adapted to the design of the foil 2, namely the number of layers of the layer assembly 22 and/or the requirement for any separation steps.

It is also possible to connect several systems 1 according to Fig. 1 in series, i.e. one after the other, to increase the material throughput per time unit. In that case, the foil 2 coming out of the exit 20 may be guided to another feeding unit of a following system, and so on.

The bendable foil 2 mentioned above can alternatively be a single layer bendable foil, which is conveyed through the system 1 and being conditioned for a predefined amount of time. In this case, the plant 26 can be configured for processing the bendable foil 2. In addition to the system 1 according to Fig. 1, the plant 26 requires only one winding element to wind up the foil 2 after it has been conditioned in the system 1 and fed out of the system 1 at the exit 20.

Whenever the present disclosure refers to a driven roller element, it means that said element is drivingly connected to a drive unit configured to transmit a driving force to the driven roller element directly or indirectly via a gear stage or the like. The same can apply to the winding elements and/or deflection pulleys mentioned in this disclosure, each of which can be drivingly connected to a drive unit configured to transmit a driving force to the winding element or deflection pulley directly or indirectly via a gear stage or the like.

Throughout the description, including the claims, the term "comprising a" should be understood as being synonymous with "comprising at least one" unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

A reference herein to a patent document or any other matter identified as prior art, is not to be taken as an admission that the document or other matter was known or that the information it contains was part of the common general knowledge as at the priority date of any of the claims.

## Claims

1. A system (1) for processing a bendable foil (2), comprising:
- a feeding unit (4) for feeding the foil (2) into the system (1) with a controlled feeding speed in a first direction (5); and
- at least one first transport and conditioning unit (7, 7a) for guiding the foil (2) in the first direction (5) and for providing a controlled first temperature to the foil (2); wherein the first transport and conditioning unit (7, 7a) comprises at least a first and a second guiding plate (9, 10), wherein the foil (2) is arranged between the first guiding plate (9) and the second guiding plate (10) in such a way, that the two guiding plates (9, 10) provide a first transport channel (8) for the foil (2), and wherein the guiding plates (9, 10) comprise gas outlets (11) to provide a gas cushion for conditioning the foil (2) and for contactless guiding of the foil (2) in said transport channel (8) between said first and second guiding plate (9, 10).

2. The system (1) of claim 1, the feeding unit (4) comprising at least one driven roller element (6), optionally two driven roller elements (6), for feeding the foil (2) into the system (1).

3. The system (1) according to according to any one of the preceding claims, further comprising:
- at least a first deflection unit (13, 13a) for deflecting the foil (2) guided in said transport channel (8) in a second direction (14), wherein said second direction (14) being different from said first direction (5).

4. The system (1) of claim 3, further comprising:
- at least a second transport and conditioning unit (7, 7b), configured to receive the foil (2) from the first deflection unit (13, 13a) in order to guide the foil (2) in the second direction (14) and to provide a controlled second temperature to the foil (2).

5. The system (1) of claim 4, further comprising:
- at least a second deflection unit (13, 13b) for deflecting the foil (2) in a third direction (19), wherein said third direction (19) being different from said second direction (14).

6. The system (1) according to any one of the claims 3 to 5, wherein said deflection unit (13, 13a, 13b) comprises at least one first deflection element (15), a driven first roller element (17) and a non-driven second roller element (18), the second roller element (18) being displaceable laterally with respect to said first roller element (17).

7. Plant (26) for processing a bendable foil (2), comprising
- a system (1) according to any one of the preceding claims; and
- a first winding element (29) for winding up the foil (2) after it being conditioned.

8. A plant (26) for obtaining a metalated battery electrode, comprising
- a system according to any one of the claims 1 to 6, wherein the bendable foil (2) comprises a layer assembly (22) with a first layer (23a) and at least a second layer (23b), the first layer (23a) being a battery electrode foil and the at least second layer (23b) being a metal coated layer, the metal coated layer comprising a substrate (24) and a metal coating (25), and the metalated battery electrode being obtained by conditioning the layer assembly (22) in said transport and conditioning unit (7, 7a, 7b);
- a first substrate removal unit (27) for removing the substrate (24) from the first layer (23a) after the layer assembly (22) being conditioned; and
- a first winding element (29) for winding up the first layer (23a) after the substrate (24) being removed from the first layer (23a).

9. The plant (26) according to claim 8, further comprising a second winding element (31) for winding up the substrate (24).

10. A method of processing a bendable foil (2), the method comprising the steps:
- providing a bendable foil (2);
- providing a system (1) for processing the foil (2) according to any of the claims 1 to 6;
- feeding the foil (2) into the system (1) with a controlled feeding speed in the first direction (5);
- contactless guiding and conditioning of the foil (2) in the first transport channel (8) by an air cushion provided between the first guiding plate (9) and the second guiding plate (10) of the first transport and conditioning unit (7, 7a)

11. The method according to claim 10, further comprising the steps:
- contactless guiding of the foil (2) in the first transport channel (8) until the foil (2) reaches the first deflection unit (13, 13a);
- deflecting the foil (2) from the first direction (5) into the second direction (14) by the at least one first deflection element (15) and the roller elements (17, 18) of said first deflection unit (13, 13a), the foil (2) being conveyed into the second direction (14) by the driven first roller element (17),
- contactless guiding and conditioning of the foil (2) in a second transport channel (8) by an air cushion provided between a first guiding plate (9) and a second guiding plate (10) of the second transport and conditioning unit (7, 7b) until the foil (2) reaches the second deflection unit (13, 13b);
- deflecting the foil (2) from the second direction (14) into the third direction (19) by the at least one first deflection element (15) and the roller elements (17, 18) of said second deflection unit (13, 13b), the foil (2) being conveyed into the third direction (19) by the driven first roller element (17),
wherein, when the second deflection unit (13, 13b) receives the foil (2) for deflecting and forwarding the foil (2) into the third direction (19) the non-driven roller element (18) of the first deflection unit (13, 13a) is being displaced laterally with respect to the first roller element (17) of the first deflection unit (13, 13a) such that the non-driven roller element (18) does not contact the foil (2) anymore.

12. The method according to claim 10 or claim 11, wherein the method is being carried out under dry air or protective gas atmosphere conditions.

13. A method of producing a battery cell, the method comprising obtaining a metalated battery electrode according to any one of the preceding method claims, the bendable foil (2) comprising a layer assembly (22) with a first layer (23a) and at least a second layer (23b), the first layer (23a) being a battery electrode foil and the at least second layer (23b) being a metal coated layer, the metal coated layer comprising a substrate (24) and a metal coating (25), wherein the metalated battery electrode being obtained by conditioning the layer assembly (22) in said transport and conditioning unit (7, 7a, 7b).

14. The method according to claim 13, further comprising the steps:
- removing the substrate (24) from the battery electrode foil; and
- winding up the metalated battery electrode on a first winding element (29).

15. The method according to claim 14, further comprising the step:
- winding up the substrate (24) on a second winding element (31).
